# EUROPEAN PATENT APPLICATION

(11) **EP 2 412 416 A1**
(43) Date of publication of application: **01.02.2012**
(21) Application number: 10170992.1
(22) Date of filing: 28.07.2010
(51) Int. Cl.: B01D 24/14, B01D 24/42

(54) **Deep Bed Filter**

(71) Applicant: MANN + HUMMEL GMBH, 71638 Ludwigsburg (DE)
(72) Inventor: Novak, Dirk, 3740, Bilzen (BE)

(57) **Abstract**

The invention relates to a deep bed filter (1) for removing contaminants from a liquid, comprising: a filter vessel (2) for housing a granular filter material, the filter vessel (2) having an inlet (3) for introduction of contaminated liquid and a plurality of outlet tubes (7) arranged inside the filter vessel (2) to receive clarified liquid after passing through the granular filter material. The deep bed filter (1) has a collector member (8) comprising at least two tubular members (9) extending through a wall (2a) of the filter vessel (2) for connecting at least two of the outlet tubes (7), the tubular members (9) being attached to the outlet tubes (7) in a detachable way.

## Description

### Technical Field

The invention relates to deep bed filters for filtering liquids containing contaminants such as particulates, lint, and possibly oil. Such deep bed filters typically comprise a vertical filter vessel for housing a bed of granular filter material, e.g. polyvinyl chloride, polyethylene, or wood sawdust. The filter vessel comprises an inlet for the introduction of contaminated liquid, and one or more outlet tubes arranged in the vessel to receive the clarified liquid after passing through the filter material.

### Background Art

A deep bed filter arrangement with a filter medium capable of being back-flushed is described in US 3,557,955. The filter vessel described therein has a centrally arranged outlet pipe which extends at one end through the bottom wall of the filter vessel.

US 3,953,333 discloses a method and apparatus for rejuvenation of a bed of granular filter material used for filtering contaminated liquid in a deep bed filter. The deep bed filter described therein comprises a plurality of outlet tubes mounted on an annular ledge in the vessel, the outlet tubes communicating by appropriate openings in the ledge with an annular outlet flow channel. The outlet flow channel is defined by the ledge and a downwardly directed structural member which may be integral with the ledge. Clarified liquid flows into the outlet tubes, downwardly through these tubes, and out of the vessel through a flow conduit connected to the annular outlet flow channel.

A similar arrangement is disclosed in US 3,550,774. In some embodiments described therein, the outlet tubes are connected at their bottom ends to a clean liquid compartment which is formed as an inner channel of the filter vessel. The clean liquid compartment is connected to a conduit for connecting the filter vessel to a clean liquid tank.

In the filter arrangements described above, due to the harsh environment in which deep bed filters are typically operated, either corrosion-free materials such as stainless steel or materials with an anticorrosive coating have to be used. However, when applying an anticorrosive coating to components of the filter vessel which are not easily accessible, inspecting the anticorrosive coating for defects and especially repairing of the anticorrosive coating in the degraded regions may be difficult.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a deep bed filter for removing contaminants from a liquid, comprising: a filter vessel for housing a (vertical) bed of a granular filter material, the filter vessel having an inlet for introduction of contaminated liquid and a plurality of outlet tubes arranged inside the filter vessel to receive clarified liquid after passing through the granular filter material. The deep bed filter further comprises a collector member having at least two tubular members extending through a (bottom) wall of the filter vessel for connecting at least two of the outlet tubes, the tubular members being attached to the outlet tubes in a removable way.

By connecting the outlet tubes of the filter vessel individually with tubular members extending through the bottom wall of the filter vessel, the need for a collection channel for collecting clarified liquid inside the filter vessel is dispensed with. As the tubular members of the collector member are attached to the bottom ends of the outlet tubes in a detachable way, the collector member may be removed as a whole from the filter vessel. This is advantageous, as collector members of different sizes may be chosen depending on the amount of liquid passing through the bed of filter material. Furthermore, when a coating is applied to the inside surface of the tubular members, the coating may be easily inspected either during assembly of the collector member, or later on, as the collector member may be easily disassembled after removal from the filter vessel.

Typically, the collector member comprises at least one collector pipe section arranged outside of the filter vessel, the collector pipe section connecting at least two of the tubular members. It will be understood that in general more than two tubular members are connected to one collector pipe section, and that the collector member may comprise two or more collector pipe sections, being interconnected e.g. by T-pieces, saddles, etc., providing multiple connections to the filter vessel.

In some embodiments, portions of the tubular members which protrude into the filter vessel prolong the outlet tubes in a longitudinal direction. Typically, the outlet tubes extend in a longitudinal (vertical) direction of the filter vessel, and the portions of the tubular members inside the filter vessel prolong the outlet tubes, i.e. they also extend in a vertical direction and are arranged concentrically with the outlet tubes.

In preferred embodiments, the detachable connection of the tubular members to the outlet tubes comprises at least one of clamps, flanges, and grooved flanges. These are exemplary means suitable for the attachment of tubular members. However, those skilled in the art will appreciate that other ways of forming a detachable connection between the tubes may be employed as well.

In some embodiments, the collector member comprises a coating, in particular an anticorrosive coating, on an inner surface thereof. The coating may be applied to the inner surface of the tubular members and to any other surface of the components of the collector member which are brought into contact with the clarified liquid.

In another embodiment, the material of the tubular members, preferably of the entire collector member, is selected from the group consisting of: a plastic material, in particular polyvinyl chloride, and plain (carbon) steel. Typically, stainless steel is used for parts which are brought into contact with the clarified fluid. However, as the inner surface of the collector member may be coated with an anticorrosive coating which can be inspected during assembly, the collector member, resp., its components, may be made of a material which may otherwise be subject to corrosion.

In another embodiment, the collector member consists of a plurality of interconnected pipes. In this way, the collector member may be built up in any suitable size from standard components which are available on the market and may easily be assembled (and disassembled).

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawings and are explained in the detailed description below. The following are shown:

Fig. 1 shows an embodiment of a vertical deep bed filter according to the invention, and

Figs. 2a,b show a detail of the deep bed filter of Fig. 1 with a collector member extending through the bottom wall of the filter vessel.

### Detailed Description

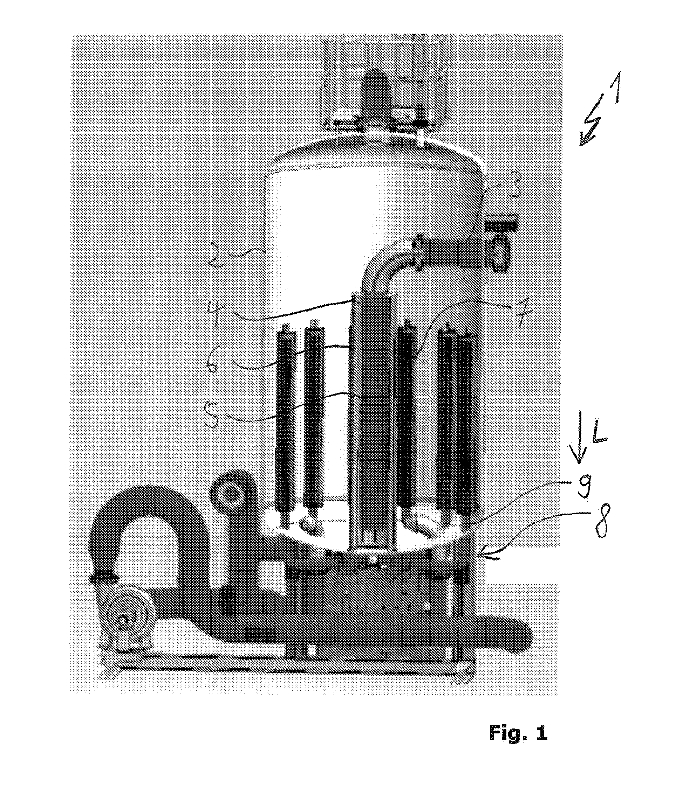

**Fig. 1** shows a deep bed filter **1** for removing contaminants from a contaminated liquid. The deep bed filter 1 comprises a filter vessel **2** for housing a granular filter material, in the present example wood sawdust (not shown), the filter vessel 2 having an inlet **3** for introduction of contaminated liquid from a flow passageway (not shown). The inlet 3 is connected to a central tube **4** formed e.g. from a standard pipe section made of stainless steel. The central tube 4 comprises a plurality of radial perforations **5** and is covered by a mesh wire **6** against which the granular filter material may accrete.

A plurality of twelve radially arranged outlet tubes **7** (five of which being shown in Fig. 1) are provided in the filter vessel 2. The outlet tubes 7 receive the clarified fluid which has passed through the filter material and are substantially identical in structure to the central tube 4, but smaller. The outlet tubes 7 are attached to the wall of the filter vessel 2 using ledges or other suitable means of attachment.

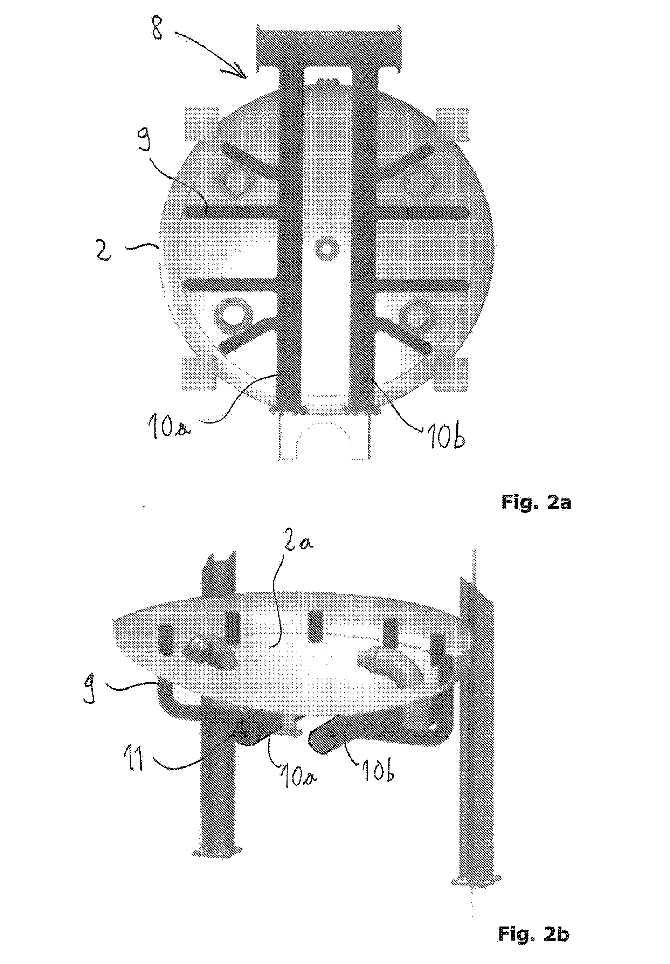

A collector member **8** is connected to the bottom ends of the outlet tubes 7 via tubular members **9**, as can be seen in greater detail in **Figs. 2a****,b**. In the present example, the collector member 8 comprises two horizontal pipe sections **10a**, **10b** which are connected to each other at one end thereof. Each pipe section 10a, 10b has six tubular members 9 branching off from the pipe sections 10a, 10b and extending through the bottom wall **2a** of the filter vessel 2 in a vertical direction. Thus, the portions of the tubular members 9 which are arranged inside the filter vessel 2 prolong the outlet tubes 7 in a longitudinal (vertical) direction L of the filter vessel 2.

The upper ends of the tubular members 7 are attached to the lower ends of the outlet tubes 9 in a detachable way, e.g. by clamps, flanges, grooved flanges, etc. In this way, the entire collector member 8 may be removed from the filter vessel 2 e.g. for inspection, or for replacing it by a collector member of a different size, e.g. for adapting the deep bed filter 1 to different flow rates. Moreover, when the collector member 8 is worn out, it may be replaced by another collector member, i.e. the collector member 8 may be used as a spare part.

The removable attachment of the collector member 8, resp., of the tubular members 9 to the filter vessel 2 is advantageous as in this way the inside of the collector member 8 may be inspected with ease using conventional inspection techniques. In particular when the entire collector member 8 consists of a plurality of interconnected pipes 9, 10a, 10b, the detached collector member 8 may be easily disassembled for inspection.

Inspection may become necessary e.g. when the inner walls of the pipes 9, 10a, 10b of the collector member 8 are coated with an anticorrosive coating 11, as such a coating 11 may be degraded during operation of the deep bed filter 1. As inspection of the collector member 8 may be easily achieved, materials which are subject to corrosion (but coated with an anticorrosive coating) may be used as the structural components thereof. The pipes 9, 10a, 10b may thus be made of steel, in particular plain carbon steel, plastic materials, e.g. PVC, etc.

In summary, using a collector member with an external, detachable piping system for connecting the outlet tubes of the filter vessel to a common outlet conduit allows an easy access, e.g. for inspection, and dispenses with the need for a difficultly accessible outlet flow channel inside the filter vessel.

## Claims

1. Deep bed filter (1) for removing contaminants from a liquid, comprising:
a filter vessel (2) for housing a granular filter material, the filter vessel (2) having an inlet (3) for introduction of contaminated liquid and a plurality of outlet tubes (7) arranged inside the filter vessel (2) to receive clarified liquid after passing through the granular filter material, **characterized by** a collector member (8) comprising at least two tubular members (9) extending through the wall (2a) of the filter vessel (2) for connecting at least two of the outlet tubes (7), the tubular members (9) being attached to the outlet tubes (7) in a detachable way.

2. Deep bed filter according to claim 1, wherein the collector member (8) comprises at least one collector pipe section (10a, 10b) arranged outside of the filter vessel (2), the collector pipe section (10a, 10b) connecting at least two of the tubular members (7).

3. Deep bed filter according to any one of the preceding claims, wherein portions of the tubular members (9) protruding into the filter vessel (2) prolong the outlet tubes (7) in a longitudinal direction (L).

4. Deep bed filter according to any one of the preceding claims, wherein the detachable connection of the tubular members (9) to the outlet tubes (7) comprises at least one of clamps, flanges, and grooved flanges.

5. Deep bed filter according to any one of the preceding claims, wherein the collector member (8) comprises a coating, in particular an anticorrosive coating (11), on an inner surface thereof.

6. Deep bed filter according to any one of the preceding claims, wherein the material of the tubular members (9), preferably of the entire collector member (8), is selected from the group consisting of: plastic materials, in particular polyvinyl chloride, and plain steel.

7. Deep bed filter according to any one of the preceding claims, wherein the collector member (8) consists of a plurality of interconnected pipes (9, 10a, 10b).
